# FASCICULE DE BREVET EUROPEEN

(11) **EP 3 209 622 B1**
(45) Date de publication et mention de la délivrance du brevet: **12.12.2018**
(21) Numéro de dépôt: 15791703.0
(22) Date de dépôt: 21.10.2015
(51) Int. Cl.: C03C 17/23, C03C 17/28, C03C 17/30, C03C 17/32, C03C 17/34, A47F 3/04

(54) **APPLICATION D'UN SUBSTRAT TRANSPARENT MONOLITHIQUE ANTI-CONDENSATION**
VERWENDUNG EINES MONOLITHISCHEN, TRANSPARENTEN KONDENSATIONSSCHUTZSUBSTRATS
USE OF A MONOLITHIC, TRANSPARENT ANTI-CONDENSATION SUBSTRATE

(30) Priorité: 24.10.2014 FR 1460225
(43) Date de publication de la demande: 30.08.2017
(73) Titulaire: Saint-Gobain Glass France, 92400 Courbevoie (FR)
(72) Inventeur: FOTI, Fabio, 60280 Margny-lès-Compiègne (FR); GODMER, Frédéric, 75003 Paris (FR)
(74) Mandataire: Saint-Gobain Recherche
(86) Numéro de dépôt international: PCT/FR2015/052827
(87) Numéro de publication internationale: WO 2016/062970

(56) Documents cités:
- WO-A1-2006/125874
- WO-A2-2007/035801
- DE-A1-102012 017 264

## Description

La présente invention a trait au stockage et à la présentation à la vente de produits en général alimentaires à une température centrée autour de 0 à 4 °C, c'est-à-dire pouvant atteindre des valeurs légèrement inférieures ou légèrement supérieures à ce domaine, néanmoins communément appelé « froid positif ».

Ces produits sont en général rangés dans des rayonnages en communication directe avec l'atmosphère du magasin. A proximité de ces rayonnages, les clients ressentent fréquemment le froid. Le chauffage du magasin est éventuellement à adapter à cet effet. La production de froid nécessite une énergie accrue du fait de la communication du rayon froid avec l'atmosphère du magasin.

Les inventeurs ont à présent imaginé d'isoler ces rayonnages froids par une paroi transparente.

On connait déjà des portes vitrées d'enceintes réfrigérées à températures aussi basses que -18, voire -25 °C. Le problème posé par ces portes de congélateurs est notamment celui du givre se formant à leur ouverture sur leur face froide côté enceinte. En effet lors de cette ouverture, l'humidité ambiante du magasin se condense sur la face froide et cristallise en givre. Pour y remédier, des moyens de chauffage de cette face froide de la porte sont prévus pour supprimer le givre afin de restaurer une vision correcte à travers la porte.

Pour supprimer ou au moins réduire ces moyens de chauffage de la porte de congélateur, la demande WO 00/71481 envisage de revêtir la face froide de la porte de congélateur d'une couche anti-givre. A l'ouverture de la porte, cette couche absorbe l'humidité qui se condense, et l'adsorbe également tout au long de chaînes macromoléculaires hydrophiles qu'elle contient. L'absorption est obtenue par un matériau polymère apte à se remplir progressivement à la manière d'une éponge ; un exemple en est une matrice polyuréthane. En adsorbant de l'eau de condensation, la chaîne macromoléculaire hydrophile telle que polyvinylpyrrolidone, interpénétrée avec la matrice polyuréthane, se charge d'une gaine fine d'eau. Si la couche anti-givre est suffisamment épaisse pour ne pas être saturée d'eau de condensation, selon la durée d'ouverture de la porte, aucune condensation visible, cristallisée en givre, ne se forme.

Comme divulgué en particulier par la demande WO 2006/125874, ces portes de congélateur vitrées sont avantageusement constituées de vitrages multiples isolant thermiquement, doubles ou triples. Ainsi la face chaude de la porte, en contact avec l'atmosphère du magasin est-elle aisément maintenue à une température supérieure au point de rosée, de sorte qu'aucune condensation de buée ne se produit.

Par contre, en imaginant fermer un rayonnage à froid positif avec une feuille de verre monolithique, les inventeurs ont pris conscience de l'existence réelle d'un risque que la face chaude du verre monolithique, en contact avec l'air ambiant du magasin, ne soit à une température inférieure au point de rosée (17 °C à 25 °C et 60 % d'humidité relative), et que par conséquent de la buée apparaisse et gêne la vision des produits en vente à travers le verre.

A cet effet, l'invention a pour objet pour séparer une enceinte refroidi à une température de 0 à 4 °C d'une atmosphère ambiante l'application d'un substrat transparent monolithique, caractérisé en ce qu'il comprend sur une première face en contact avec l'air refroidi une couche bas-émissive et sur la deuxième face en contact avec l'atmosphère ambiante du magasin une couche anti-condensation. Une couche bas-émissive désigne ici une couche d'émissivité comprise entre 1 et 15 %. Placée du côté froid du substrat, elle a pour fonction de réfléchir une proportion maximale du rayonnement thermique du côté chaud du substrat, c'est-à-dire côté atmosphère du magasin. La couche bas-émissive augmente donc normalement la température du côté opposé du substrat, à une valeur supérieure au point de rosée dans les conditions de températures et humidité précitées. Si toutefois la température du côté froid baisse, ou si celle du côté chaud augmente ou encore si l'humidité relative du côté chaud augmente, une légère condensation est éventuellement susceptible de se former sur la face chaude du substrat, mais sous la forme d'un film uniforme d'eau ne gênant pas la vision à travers le substrat, grâce à la couche anti-condensation dont est munie la face chaude de celui-ci. La couche anti-condensation empêche la formation de buée, constituée de gouttelettes d'eau.

D'autre part, dans la définition de l'invention, le terme « couche » désigne indifféremment une unique couche ou bien un empilement de couches, tant pour la couche bas-émissive que pour la couche anti-condensation.

Selon des caractéristiques préférées du substrat de l'invention :
- la couche anti-condensation comprend l'un au moins des matériaux polymères choisis parmi les polyuréthane, polyacétal, polyester, poly(alcool vinylique), poly(acide acrylique), polyéthylène glycol, polypropylène glycol, polyol, polyvinylpyrrolidone, polyvinylpyridine, polyacrylate, polyacrylonitrile, polyacrylamide, polyacroléine, poly(acétate de vinyle), silane, copolymère de plusieurs de ceux-ci, seul ou en mélange de plusieurs d'entre eux ;
- la couche anti-condensation est à base de polyuréthane ;
- la couche anti-condensation comprend une matrice de polyuréthane avec laquelle des molécules de polyvinylpyrrolidone sont interpénétrées ;
- la couche anti-condensation a une épaisseur comprise entre 5 et 80, de préférence 10 et 70, et de manière particulièrement préférée au plus égale à 60 µm ;
- la couche anti-condensation constitue la surface principale libre, c'est-à-dire exposée à l'atmosphère extérieure du magasin d'un film adhésif antibuée, dont l'autre surface principale est adhésive; ce film comporte une âme constituée notamment d'un matériau polymère souple du type éthylène - acétate de vinyle (EVA) ou similaire; le film adhésif antibuée est amovible et remplaçable ;
- le substrat est en matériau verrier minéral, notamment verre float sodocalcique ou polymère organique tel que polycarbonate, poly(méthacrylate de méthyle).

L'invention a donc pour objet l'application du substrat décrit précédemment pour séparer une enceinte refroidie à une température de 0 à 4 °C d'une atmosphère ambiante. Cette température de 0 à 4 °C fait ici référence à la température de consigne de l'enceinte, c'est-à-dire une valeur autour de laquelle la température peut plus ou moins fluctuer en fonction de la localisation dans l'enceinte, et aussi bien entendu en fonction du temps écoulé depuis la dernière ouverture de la séparation constituée par le substrat. Une atmosphère ambiante de référence (intérieur de magasin) est définie, pour les besoins de l'invention, par une température de 25 °C et une humidité relative de 60 %. Comme expliqué ci-dessus, c'est la face du substrat destinée à être en contact avec l'air refroidi qui est munie de la couche bas-émissive, et celle destinée à être en contact avec l'atmosphère ambiante du magasin qui est munie de la couche anti-condensation.

L'invention est maintenant illustrée par l'exemple suivant.

### Exemple

Des feuilles de verre float sodocalcique de 500 mm X 1325 mm et 4 ou 6 mm d'épaisseur sont revêtues d'une couche bas-émissive sur une première face, et d'une couche anti-condensation sur la seconde face.

Sont utilisés comme couches bas-émissives, les empilements suivants, classés par émissivité (en %) croissante :
- 3% : verre/SnZnO 25nm / ZnO 5nm / Ag 10nm / ZnO 5nm / NiCr 1 nm / ZnO 5nm / SnZnO 30nm / TiOx 3nm ;
- 7% : verre/SnZnO 25nm / ZnO 5nm / Ag 6 nm / ZnO 5nm / NiCr 1 nm / ZnO 5nm / SnZnO 30nm / TiOx 3nm ;
- 10% : verre/Si3N4 (5nm) /SiO2 (40 nm) / ITO (150 nm) / Si3N4 (12 nm) / SiO2 (75 nm) / TiO2 (4 nm) et
- 15% : verre/SnO2 (30 nm) /SiO2 (30 nm) /SnO2:F (370 nm).

Dans des essais numérotés 1 à 6, on utilise comme couches anti-condensation des couches anti-givre et anti-buée commercialisées par la société Saint-Gobain Glass sous la marque enregistrée Everclear®, d'épaisseurs indiquées ci-dessous. Ces couches sont constituées d'une matrice de polyuréthane avec laquelle sont interpénétrées des chaînes moléculaires de polyvinylpyrrolidone.

Dans des essais 7 à 14, on utilise comme couches anti-condensation des couches hydrophiles obtenues en greffant au substrat verrier des silanes avec chaine de poly(oxyde d'éthylène) (PEO). Les silanes utilisés pour les revêtements anti-buée comportent une chaîne hydrophile de poly(oxyde d'éthylène) (PEO) et trois groupes OH liés à l'atome de Si; les groupes OH du silane réagissent (condensation) avec les groupes OH du verre formant des liaisons silanol (Si-O-Si). Les silanes peuvent aussi être fluorés pour conférer des propriétés autonettoyantes. Deux silanes ont été utilisés :
a) Aux essais n° 7 à 10, le silane commercialisé par la société Gelest sous la reference Silane SiH6188 et de formule : 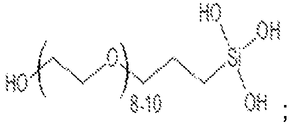 et
b) Aux essais n° 11 à 14, le silane fluoré commercialisé par la société Specific Polymers sous la référence SP-SG 192-193 et de formule :

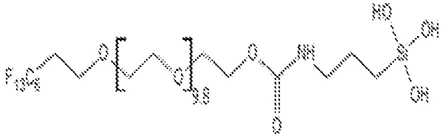

Les feuilles de verre sont disposées de manière à délimiter une enceinte réfrigérée à température de consigne de 0 °C. L'atmosphère ambiante est à 25 °C et 60 % d'humidité relative. La couche bas-émissive est côté enceinte réfrigérée et la couche anti-condensation côté « atmosphère ambiante ».

Les conditions des quatorze essais sont consignées dans le tableau suivant.

| Essai n° | Epaisseur verre (mm) | Emissivité couche (%) | Epaisseur couche anti-condensation |
|---|---|---|---|
| 1 | 4 | 3 | 20 µm |
| 2 | 4 | 7 | 20 µm |
| 3 | 6 | 10 | 40 µm |
| 4 | 6 | 15 | 40 µm |
| 5 | 6 | 10 | 50 µm |
| 6 | 6 | 15 | 50 µm |
| 7 | 4 | 3 | Quelques nm |
| 8 | 4 | 7 | Quelques nm |
| 9 | 6 | 10 | Quelques nm |
| 10 | 6 | 15 | Quelques nm |
| 11 | 4 | 3 | Quelques nm |
| 12 | 4 | 7 | Quelques nm |
| 13 | 6 | 10 | Quelques nm |
| 14 | 6 | 15 | Quelques nm |

On n'observe, dans aucun des quatorze essais, de formation de buée sur la feuille de verre.

## Revendications

1. Application d'un substrat transparent monolithique pour séparer une enceinte refroidie à une température de 0 à 4 °C d'une atmosphère ambiante, **caractérisée en ce que** la face du substrat en contact avec l'air refroidi est munie d'une couche bas-émissive, et celle en contact avec l'atmosphère ambiante du magasin est munie d'une couche anti-condensation.

2. Application selon la revendication 1, **caractérisée en ce que** la couche anti-condensation comprend l'un au moins des matériaux polymères choisis parmi les polyuréthane, polyacétal, polyester, poly(alcool vinylique), poly(acide acrylique), polyéthylène glycol, polypropylène glycol, polyol, polyvinylpyrrolidone, polyvinylpyridine, polyacrylate, polyacrylonitrile, polyacrylamide, polyacroléine, poly(acétate de vinyle), silane, copolymère de plusieurs de ceux-ci, seul ou en mélange de plusieurs d'entre eux.

3. Application selon l'une des revendications précédentes, **caractérisée en ce que** la couche anti-condensation est à base de polyuréthane.

4. Application selon l'une des revendications précédentes, **caractérisée en ce que** la couche anti-condensation comprend une matrice de polyuréthane avec laquelle des molécules de polyvinylpyrrolidone sont interpénétrées.

5. Application selon l'une des revendications précédentes, **caractérisée en ce que** la couche anti-condensation a une épaisseur comprise entre 5 et 80, de préférence 10 et 70, et de manière particulièrement préférée au plus égale à 60 µm.

6. Application selon l'une des revendications précédentes, **caractérisée en ce que** la couche anti-condensation constitue la surface principale libre d'un film adhésif antibuée.

7. Application selon l'une des revendications précédentes, **caractérisée en ce que** le substrat est en matériau verrier minéral ou polymère organique.

## Patentansprüche

1. Anwendung eines monolithischen transparenten Substrats zum Trennen eines auf eine Temperatur von 0 bis 4 °C abgekühlten Gehäuses von einer Umgebungsatmosphäre, **dadurch gekennzeichnet, dass** die Seite des Substrats, die mit der abgekühlten Luft in Kontakt ist, mit einer emissionsarmen Schicht versehen ist, und die Seite, die mit der Umgebungsatmosphäre des Geschäfts in Kontakt ist, mit einer Kondensationsschutzschicht versehen ist.

2. Anwendung nach Anspruch 1, **dadurch gekennzeichnet, dass** die Kondensationsschutzschicht mindestens eines der Polymermaterialien, ausgewählt aus Polyurethan, Polyacetal, Polyester, Polyvinylalkohol, Polyacrylsäure, Polyethylenglycol, Polypropylenglycol, Polyol, Polyvinylpyrrolidon, Polyvinylpyridin, Polyacrylat, Polyacrylnitril, Polyacrylamid, Polyacrolein, Polyvinylacetat, Silan, Copolymer von mehreren davon, allein oder als Mischung von mehreren davon umfasst.

3. Anwendung nach einem der vorhergehenden Ansprüche, **dadurch gekennzeichnet, dass** die Kondensationsschutzschicht aus Polyurethan besteht.

4. Anwendung nach einem der vorhergehenden Ansprüche, **dadurch gekennzeichnet, dass** die Kondensationsschutzschicht eine Polyurethanmatrix umfasst, mit der Polyvinylpyrrolidonmoleküle durchdrungen sind.

5. Anwendung nach einem der vorhergehenden Ansprüche, **dadurch gekennzeichnet, dass** die Kondensationsschutzschicht eine Dicke im Bereich zwischen 5 und 80, vorzugsweise 10 und 70 aufweist und besonders bevorzugt gleich 60 µm ist.

6. Anwendung nach einem der vorhergehenden Ansprüche, **dadurch gekennzeichnet, dass** die Kondensationsschutzschicht die freie Hauptoberfläche einer beschlagfreien Klebefolie bildet.

7. Anwendung nach einem der vorhergehenden Ansprüche, **dadurch gekennzeichnet, dass** das Substrat aus Mineralglasmaterial oder organischem Polymermaterial besteht.

## Claims

1. Application of a monolithic transparent substrate for separating a chamber cooled to a temperature of 0 to 4°C from an ambient atmosphere, **characterized in that** the face of the substrate in contact with the cooled air is provided with a low-emissivity layer, and the one in contact with the ambient atmosphere of the store is provided with an anti-condensation layer.

2. Application according to Claim 1, **characterized in that** the anti-condensation layer comprises at least one of the polymer materials selected from polyurethane, polyacetal, polyester, poly(vinyl alcohol), poly(acrylic acid), polyethylene glycol, polypropylene glycol, polyol, polyvinylpyrrolidone, polyvinylpyridine, polyacrylate, polyacrylonitrile, polyacrylamide, polyacrolein, poly(vinyl acetate), silane or a copolymer of several of these, alone or as a mixture of several thereof.

3. Application according to either of the preceding claims, **characterized in that** the anti-condensation layer is based on polyurethane.

4. Application according to one of the preceding claims, **characterized in that** the anti-condensation layer comprises a polyurethane matrix with which polyvinylpyrrolidone molecules are interpenetrated.

5. Application according to one of the preceding claims, **characterized in that** the anti-condensation layer has a thickness of between 5 and 80 µm, preferably 10 and 70 µm and particularly preferably at most equal to 60 µm.

6. Application according to one of the preceding claims, **characterized in that** the anti-condensation layer forms the free main surface of an anti-fogging adhesive film.

7. Application according to one of the preceding claims, **characterized in that** the substrate is made of mineral glass material or organic polymer.
